# EUROPÄISCHE PATENTSCHRIFT

(11) **EP 3 424 706 B1**
(45) Veröffentlichungstag und Bekanntmachung des Hinweises auf die Patenterteilung: **29.06.2022**
(21) Anmeldenummer: 18178943.9
(22) Anmeldetag: 21.06.2018
(51) Int. Cl.: B32B 27/10, B32B 27/20, B32B 27/40, E04F 15/10

(54) **PLATTENFÖRMIGES BAUELEMENT UND VERFAHREN ZU DESSEN HERSTELLUNG**
PLATE-SHAPED SEMICONDUCTOR COMPONENT AND METHOD FOR ITS MANUFACTURE
COMPOSANT EN FORME DE PLAQUE ET SON PROCÉDÉ DE FABRICATION

(30) Priorität: 06.07.2017 DE 102017115185
(43) Veröffentlichungstag der Anmeldung: 09.01.2019
(73) Patentinhaber: Schulte, Guido, 59602 Rüthen-Meiste (DE)
(72) Erfinder: Schulte, Guido, 59602 Rüthen-Meiste (DE)
(74) Vertreter: Ksoll, Peter

(56) Entgegenhaltungen:
- EP-A1- 1 023 169
- EP-A1- 3 088 204
- US-A1- 2011 167 744
- US-A1- 2017 058 537

## Beschreibung

Die Erfindung betrifft ein plattenförmiges Bauelement, insbesondere ein Fußbodenpaneel und ein Verfahren zu dessen Herstellung.

Oberflächenbeläge, beispielsweise in Form von Bodenbelägen gibt es in unterschiedlichsten Ausführungsformen. Weit verbreitet sind plattenförmige Bauelemente, insbesondere Fußbodenpaneele in Form von Laminat oder Parkett mit Trägerplatten aus verdichteten Faserstoffen. Elastische Bodenbeläge in Form von PVC-Belägen, Linoleum oder auch Korkbeläge sind ebenfalls gängig.

Aus der EP 3 020 885 A1 ist ein Paneel zur Ausbildung eines wasserfesten Bodens bekannt. Das Paneel besitzt einen Kern aus einem thermoplastischen Material, eine feste Deckschicht sowie eine Verstärkungsschicht zwischen der Deckschicht und dem Kern. Das Material des Kerns ist auf Basis von Polyvinylchlorid (PVC) und/oder Polyethylen (PE) und/oder Acrylnitrid-Butadien-Styrol (ABS) gebildet. Die mit dem Kern vorzugsweise verschweißte oder verklebte Verstärkungsschicht enthält insbesondere Polyvinylchlorid (PVC) und/oder Polyethylen (PE).

Durch die EP 2 755 818 B1 zählt ein Bodenbelag zum Stand der Technik, der eine Dekorschicht aufweist, die aus einem Zellstoffpapier besteht, das mit Polyurethan imprägniert ist. Auf der Dekorschicht ist eine Nutzschicht vorgesehen. Der Bodenbelag weist weiterhin einen Kern und eine Rückenschicht auf. Dekorschicht, Kern und Rückenschicht bestehen jeweils aus Polyurethan.

Gegenstand der DE 199 44 399 A1 ist ein Fußbodenelement mit einer Trägerschicht und wenigstens einer einseitig auf dieser angeordneten und fest mit ihr verbundenen Deckschicht. Die Trägerschicht ist aus Polyurethan oder Acrylat als Bindemittel und darin angeordneten Füllstoffen gebildet.

Die EP 1 023 169 A1 offenbart ein plattenförmiges Bauelement, insbesondere Fußbodenpaneel, welches eine Trägerschicht und eine oberseitige Deckschicht aufweist. Die Trägerschicht ist auf Basis von Polyurethan gebildet. Die Deckschicht weist zumindest eine Lage aus Dekorpapier auf, wobei die Trägerschicht und die Deckschicht unter Temperatur- und Druckeinwirkung miteinander verpresst sind. Weiter sind in der Trägerschicht Füllstoffe, insbesondere mineralische Füllstoffe enthalten.

Ein plattenförmiges Bauelement zur Herstellung eines Bodenbelags geht auch aus der US 2011/167744 A1 hervor.

Ferner zählt ein Verfahren zur Herstellung eines dekorierten Wand- oder Bodenpaneels durch die EP 3 088 204 A1 zum Stand der Technik.

Ebenfalls offenbart die US 2017/058537 A1 ein Paneel mit einem mehrlagigen Aufbau. Eine Deckschicht umfasst eine Nutzschicht, eine Druckschicht, eine Dekorschicht und eine erste thermoplastische Schicht sowie eine Verstärkungsschicht. Eine Substratschicht weist eine zweite thermoplastische Schicht mit einer Verstärkungsschicht auf.

Der Erfindung liegt die Aufgabe zugrunde, ein industriell herstellbares, qualitativ verbessertes plattenförmiges Bauelement mit sehr guten Gebrauchseigenschaften zu schaffen und ein Verfahren zu dessen Herstellung aufzuzeigen.

Die Lösung des gegenständlichen Teils der Aufgabe zeigt Anspruch 1 auf.

Ein erfindungsgemäßes Verfahren ist in Anspruch 9 charakterisiert.

Vorteilhafte Ausgestaltungen des erfindungsgemäßen plattenförmigen Bauelements und des Herstellungsverfahrens sind Gegenstand der abhängigen Ansprüche.

Das plattenförmige Bauelement weist eine Trägerschicht und eine oberseitige Deckschicht auf. Die Trägerschicht ist auf Basis von Polyurethan gebildet. Die Deckschicht weist zumindest eine Lage aus Dekorpapier auf. Erfindungsgemäß sind die Trägerschicht und die Deckschicht unter Temperatur- und Druckeinwirkung miteinander verpresst.

Ein Aspekt der Erfindung sieht das Verpressen von Trägerschicht und Deckschicht in einer Kurztaktpresse vor. In der Presse werden die Schichten und die die Schichten bildenden Lagen unter Hitze und Druck verpresst. Der Druckaufbau und der Druckabbau der Presse ist in Stufen regelbar. Die Komponenten, das heißt die Trägerschicht und die Komponenten der Deckschicht, werden in der Presse auf der Pressenschicht angeordnet. Die Presse wird geschlossen und die Temperatur und der Druck wirken auf die Komponenten ein. Dabei werden die Harzkomponenten (Polykondensationsharze) flüssig. Trägerschicht und Deckschicht verbinden sich miteinander. Die Oberfläche und die Struktur des Bauelementes werden geformt. Unmittelbar mit dem Abkühlen härten die Harzkomponenten aus. Die Harze sind so konfektioniert, dass sie mit dem Abkühlen binden, allerdings weiterhin elastische Eigenschaften haben. Hierzu sind die Harze vorzugsweise durch Polyurethanzusätze elastifiziert.Die Trägerschicht ist auf Basis von Polyurethan gebildet. Die Trägerschicht besteht folglich aus Polyurethanbindemitteln (ein- oder zweikomponentig) und Füllstoffen bzw. besteht zum überwiegenden Teil aus polyurethanbasierenden Bindemitteln und Füllstoffen. Ein Aspekt sieht hierbei die Verwendung von zwei Komponenten eines Polyurethans vor sowie Füllstoffe wie Kreide, Talkum, mineralische Füllstoffe, auch gegebenenfalls Zellulose als Füllstoffe, Pigmente und Schaumbildner bzw. Porenbildner. Ebenfalls sind Additive und Stabilisierungsmittel vorgesehen.

Vorzugsweise sind in der Trägerschicht mineralische Füllstoffe enthalten.

Die Füllstoffe besitzen eine Korngröße von kleiner oder gleich (≤) 1 mm.

Die Polyurethankomponenten bzw. Polyurethanbindemittel können auch zumindest teilweise aus Recyclingprodukten, also recyceltem Polyurethan bestehen und zwar in Faserform oder kubischer Form, z.B. als aus Polyurethan-Schäumen oder -Frässpänen. Besonders sinnvoll sind Polyurethankomponenten, die aus nachwachsenden Rohstoffen bestehen, wie Polyole aus diversen pflanzlichen Ölen.

Das Polyurethan der Trägerschicht kann aus einem aromatischen Polyol synthetisiert werden. Hierbei handelt es sich um biogene Polyole, welche aus nachwachsenden Rohstoffen gewonnen werden. Möglich ist es auch, dass Polyurethan aus einem aliphatischen Polyol herzustellen.

Die Trägerschicht kann ferner neben Polyurethan Füllstoffe, Additive und/oder Farbstoffe enthalten. Diese sind in den die Trägerschicht bildenden Ausgangswerkstoff eingemischt. Über die Füllstoffe und/oder Additive können die Sichteigenschaften, insbesondere deren Elastizität und die Festigkeit eingestellt werden. Farbstoffe dienen zur Farbgebung der Trägerschicht.

Bei der Deckschicht kann es sich um eine einzige Lage aus einem Dekorpapier handeln. Bei dem Dekorpapier handelt es sich um eine auf Zellulose basierende Schicht aus Papier, die eine dekorative Oberfläche besitzt. Das Dekorpapier ist mit aushärtbarem Kunstharz imprägniert. Hierbei handelt es sich vorzugsweise um ein aminoplastisches Harz, ein Melaminmharz, ein Polyurethan oder um ein Gemisch der zuvor genannten Stoffe. Der Gewichtsanteil der Imprägnierung beträgt 70 bis 130 Gewichtsprozent, bezogen auf das Gewicht des Ausgangspapiers. In der Imprägnierung können Additive, beispielsweise Antistatika oder die Verschleißfestigkeit steigernde Additive enthalten sein.

Die Erfindung sieht vor, dass die Deckschicht und die Trägerschicht direkt miteinander verpresst sind. Eine zusätzliche Klebstofflage ist nicht erforderlich. Umfasst die Deckschicht nur eine Lage aus Dekorpapier, ist diese direkt mit der Trägerschicht verpresst.

Vorzugsweise ist die Deckschicht mehrlagig aufgebaut. Es können mehrere Lagen aus Dekorpapier vorgesehen sein. Weiterhin können unterhalb der Lage aus Dekorpapier eine oder mehrere Lagen aus Kernpapier integriert sein. Die Deckschicht kann des Weiteren ein Overlay (Schutzschicht) umfassen, welches oberhalb des Dekorpapiers angeordnet ist. Im Overlay, also der Schutzschicht, sind bevorzugt abriebfeste Komponenten, insbesondere Mineralien, vorzugsweise Korundpartikel enthalten. Diese hochabriebfesten Komponenten sind bereits bei der Imprägnierung des Overlays zugegeben.

In einer besonderen Ausführungsform kann auch das Dekorpapier oberseitig im Rahmen der Imprägnierung mit abriebfesten Komponenten z.B. Korund oder silanisiertem Korund beaufschlagt werden. Damit sind besonders hohe Abriebwiderstände zu erzielen bzw. können dann auf Overlaypapieren alternativ ohne Korund eingesetzt werden und trotzdem hoch abriebfeste Bauelemente erzeugt werden.

Es hat sich als zweckmäßig erwiesen, wenn die Deckschicht durch zumindest eine Armierungslage verstärkt wird. Hierdurch kann die Rissfestigkeit der Deckschicht und insbesondere des in der Deckschicht enthaltenen Dekorpapiers verbessert werden. Als Armierungslagen kommen Vliesstoffe, Glasgewebe oder Glasvliese zum Einsatz. Die zumindest eine Armierungslage ist unterhalb des Dekorpapiers angeordnet. Auch die Armierungslage ist bevorzugt harzimprägniert.

Erfindungsgemäß ist in die Trägerschicht ein Stabilisierungselement eingebettet. Das Stabilisierungselement ist in Form einer Stabilisierungslage ausgeführt. Hierbei kann es sich um eine vorgefertigte Stabilisierungslage handeln, die in die Trägerschicht bei deren Herstellung eingebettet wird. Alternativ kann die Stabilisierungslage auch bei der Herstellung der Trägerschicht durch Aufstreuen von Stabilisierungselementen hergestellt werden. In die Trägerschicht kann vorteilhafterweise eine Stabilisierungslage eingebettet sein. Insbesondere kommen als Stabilisierungslagen Vliese, Gitter- oder Gewebelagen zur Anwendung. Insbesondere handelt es sich bei der Stabilisierungslage um ein Glasarmierungsvlies. Die Stabilisierungslage weist vorzugsweise ein Flächengewicht von größer oder gleich (≥) 25 g/m².

Eine Stabilisierungslage kann alternativ auch durch Faserpartikel aus Carbon, Kevlar, Glas oder synthetischen Fasern wie Polyethylenterephthalat (PET) oder Polyamiden (PA) erzeugt werden, bei der anstelle eines vorfabriziertem Blattes (Sheet) die Fasern als solche in die Polyurethanmatrix eingebettet oder eingestreut werden.

Es können mehrere Stabilisierungslagen in der Trägerschicht vorhanden sein.

Die Erfindung sieht vor, dass die Stabilisierungslage oberflächennah in der Trägerschicht integriert ist. Oberflächennah bedeutet, dass die Stabilisierungslage vollständig im Werkstoff der Trägerschicht eingebettet ist, jedoch unmittelbar unter der Oberfläche.

Für die Praxis vorteilhaft ist eine Trägerschicht, die eine Dichte von größer oder gleich (≥) 800 kg/m³, insbesondere zwischen 1.000 kg/m³ und 2.500 kg/m³ aufweist. Besonders bevorzugt ist eine Trägerschicht mit einer Dichte zwischen 1.500 kg/m³ bis 2.000 kg/m³.

Die zur Deckschicht weisende Oberfläche der Trägerschicht ist mit einer oberflächenvergrößernden Profilierung versehen. Die oberflächenvergrößernde Profilierung erfolgt insbesondere auf mechanischem Wege, vorzugsweise durch Aufrauen. Dies kann durch Schleifen, Bürsten und/oder Prägen erfolgen. Durch das Aufrauen der Trägerschicht wird deren Oberfläche vergrößert. Die makroskopischen Gegebenheiten der Oberfläche haben Einfluss auf die Verbundfestigkeit. Mit größer werdender Oberfläche nach dem Aufrauen nehmen die oberflächenabhängigen atomaren und molekularen Wechselwirkungen zu. Das verbessert die Adhäsion zwischen der Trägerschicht und der Deckschicht.

Die mechanische Bearbeitung der Oberfläche der Trägerschicht beispielsweise durch einen Schleifvorgang kann auch sinnvoll sein, um Platten- bzw. Schichtunebenheiten zu egalisieren. Weiterhin kann hierdurch die Trägerschichtoberfläche mit einer Struktur versehen werden. Eine solche Struktur kann neben Schleifen auch durch Fräsen, Bürsten oder Prägen erzeugt werden. Diese mit ausgenommener Struktur an der Oberfläche versehene Trägerschicht wird mit der Deckschicht verpresst. Beim Pressvorgang plastifiziert die Trägerschicht auf Basis von Polyurethan durch Hitze und unter Druck. Gleichzeitig härtet die Deckschicht mit dem Melaminbindemittel gut aus. Hierdurch ist es möglich, Strukturen an der Oberfläche, also an der Sichtseite des Bauelements zu erhalten, die tiefer sind als die eigentliche Stärke der Deckschicht.

Die Oberfläche der Trägerschicht kann einer profilgebenden Oberflächenbearbeitung unterzogen werden, dergestalt, dass die Struktur in der fertigen Bauelementoberfläche zu erkennen ist. Die Strukturen können beispielsweise Wellenschliff-Strukturen oder fugenähnliche Vertiefungen sein. Dies ermöglicht die Nachbildung von Stein- oder Fliesendekoren.

Die Oberfläche der Trägerschicht wird mit einer Struktur bzw. einem Strukturbild versehen, welche sichtseitig am fertigen plattenförmigen Bauelement zu erkennen ist und diesem die Oberflächenoptik verleiht. Die Strukturgebung erfolgt insbesondere durch mechanische Bearbeitung.

Das erfindungsgemäße plattenförmige Bauelement ist insbesondere ein Fußbodenpaneel. Das plattenförmige Bauelement besitzt eine Oberseite, eine Unterseite und wenigstens vier Randseiten. Die Randseiten sind dazu ausgebildet mit Randseiten weiterer Paneele verbunden zu werden, um eine Fläche eines Raumes zu bedecken. Hierzu sind in einer vorteilhaften Ausführungsform des Bauelements an den Seitenrändern der Randseiten der Trägerschicht Verriegelungsmittel ausgebildet, beispielsweise in Form von Nut und Feder oder Rast- und/oder Klickverbindungen.

Vorzugsweise ist unterseitig der Trägerschicht ein Gegenzug vorgesehen. Dieser dient der Stabilisierung und kann als Trittschalldämmung fungieren. Der Gegenzug kann separat aufgebracht werden. Möglich und vorteilhaft ist es, den Gegenzug beim Verpressen der Trägerschicht und der Deckschicht aufzubringen, das heißt die Gegenzuglage wird gemeinsam mit der Trägerschicht und Deckschicht verpresst. Bevorzugt besteht der Gegenzug aus einer imprägnierten Vlies- oder Gewebelage. Diese besitzen auf das fertige Bauelement abgestimmte Zugeigenschaften.

Zur Herstellung eines erfindungsgemäßen plattenförmigen Bauelementes wird eine rechteckig konfigurierte Trägerschicht bereitgestellt. Die Trägerschicht ist randseitig noch nicht profiliert, das heißt die Seitenränder weisen noch keine Verriegelungsmittel auf. Die Trägerschicht besteht auf Basis von Polyurethan, das heißt Polyurethan bildet den Hauptbestandteil der Trägerschicht. Von dieser Ausgangsträgerschicht wird die oberseitige Haut abgetragen. Gleichzeitig wird die Oberfläche aufgeraut und vergrößert.

Auf dieser Trägerschicht wird die Deckschicht angeordnet. Anschließend werden die Trägerschicht und die Deckschicht miteinander unter Temperatur- und Druckeinwirkung verpresst.

Das Verpressen erfolgt bei Temperaturen in einem Bereich von 120° Celsius bis 240° Celsius. Diese Temperatur wird an der Oberfläche eines Pressblechs eingestellt das mit dem Bauelement in Kontakt gebracht wird. Beim Verpressen erfolgt in einer besonderen Ausführungsform die Temperatureinwirkung von der Seite der Deckschicht her, also oberseitig. Insbesondere erfolgt dies dann bevorzugt, wenn der Gegenzug erst später in einem zweiten Arbeitsgang aufgebracht wird. Da die Trägerschicht auf Polyurethanbasis Wärme sehr gut leitet und speichert, erweicht die Trägerschicht und wird plastifiziert, ohne die Bindemittelstruktur des Polurethans zu zerstören. Diese im heißen Zustand relativ weiche Trägerschicht wirkt gleichzeitig wie ein nachgiebiges Kissen oder Presspolster.

Die Presszeit liegt zwischen 5 Sekunden und 45 Sekunden.

Der Pressdruck ist größer oder gleich (≥) 20 kg/cm² und kann bis zu einschließlich 80 kg/cm² betragen.

Nach dem Entfernen des Bauelements aus der Presse wird dieses abgekühlt. In einem nachgeschalteten Bearbeitungsvorgang werden die Seitenränder des Bauelements mechanisch bearbeitet und mit Verriegelungsmitteln profiliert.

Das plattenförmige Bauelement weist eine Gesamtstärke zwischen 2 mm und 8 mm auf. Insbesondere liegt die Gesamtstärke des Bauelements zwischen 4 mm bis 5 mm. Für die Praxis ist derzeit eine Gesamtstärke von 5 mm vorgesehen.

Die Deckschicht kann eine Struktur haben, die synchron zum Dekorbild passt. Die Oberfläche des fertigen Paneels kann unterschiedliche Glanzgrade aufweisen, vorzugsweise 3 bis 4 unterschiedliche Glanzgrade, passend zu dem oder abgestimmt auf das Dekorbild des Dekorpapiers. Je nach Anzahl der Lagen hat die Deckschicht eine Dicke in einem Bereich von 0,10 bis 0,50 mm.

Die Schutzschicht oberhalb der Dekorschicht enthält vorzugsweise antiabrasive Bestandteile. Es kann sich bei der Schutzschicht, die auch als Overlay bezeichnet wird, um eine Schicht aus imprägnierter Edelzellulose handeln. Diese wird beim Verpressen transparent. Die Schutzschicht kann alternativ auch als flüssige Schicht oder als Pulver auf die Dekorschicht appliziert sein und verbindet sich beim Verpressen mit der Dekorschicht. Die Schutzschicht hat den Zweck das Dekor gegen Abrieb, Kratzer und sonstige Beschädigungen zu schützen. Grundsätzlich ist es möglich, die Schutzschicht auch nach dem Verpressen von Trägerschicht und Deckschicht oberseitig aufzutragen. Dies erfolgt insbesondere wenn die Schutzschicht flüssig aufgetragen wird und aus einer Lackschicht besteht.

Erfindungsgemäß werden alle Komponenten, das heißt, von oben nach unten betrachtet, die Schutzschicht (Overlay), das wenigstens eine Dekorpapier, eine optional integrierte Armierungslage und die Trägerschicht in einem einzigen Arbeitsgang miteinander verpresst. Als Klebstoff zwischen der Deckschicht und der Basisschicht fungiert das Harz aus dem imprägnierten Dekorpapier.

Bei den imprägnierten Lagen der Deckschicht kommen zur Imprägnierung insbesondere aminoplastische Harze zur Anwendung, insbesondere Melaminharze. Nach dem Durchhärten über eine Polykondensation bilden die Harze duroplastische Kunststoffe. Trägerschicht und Deckschicht sind unmittelbar unter Temperatur und Hitzeeinwirkung miteinander zum plattenförmigen Bauelement verpresst.

Das erfindungsgemäße plattenförmige Bauelement ist wasserfest. Das Bauelement nimmt maximal 5% Wasser auf und neigt nicht zum Quellen, wie das bei holzbasierten Bauelementen bzw. Plattenwerkstoffen der Fall ist. Die Kantenquellungen liegen nach 24 Stunden Wasserlagerung bei kleiner 3%. Der Aufbau kann als anschmiegsam bezeichnet werden, so dass sich beim Verlegen keine Hohlräume zum Unterboden z.B. zum Estrich ausbilden. Daher ist ein aus den erfindungsgemäßen Bauelementen in die Form von Fußbodenpaneelen gebildeter Bodenbelag beim Begehen sehr leise. Es gibt keinen Resonanzhohlraum. Unebenheiten bis ca. 1 mm werden allerdings überbrückt und zeichnen sich nicht im Oberbelag bei der Nutzung durch. Das ist ein besonders vorteilhafter Aspekt hinsichtlich der Gebrauchs- und Nutzungseigenschaften.

## Patentansprüche

1. Plattenförmiges Bauelement, insbesondere Fußbodenpaneel, welches eine Trägerschicht und eine oberseitige Deckschicht aufweist, wobei die Trägerschicht auf Basis von Polyurethan (PU) gebildet ist und die Deckschicht zumindest eine Lage aus Dekorpapier aufweist, wobei die Trägerschicht und die Deckschicht unter Temperatur- und Druckeinwirkung miteinander verpresst sind, **dadurch gekennzeichnet, dass** in der Trägerschicht Füllstoffe, insbesondere mineralische Füllstoffe, enthalten sind, wobei die Füllstoffe eine Korngröße von kleiner oder gleich (≤) 1 mm besitzen und in die Trägerschicht ein Stabilisierungselement in Form von zumindest einer Stabilisierungslage eingebettet ist, wobei die Stabilisierungslage oberflächennah in der Trägerschicht angeordnet ist, so dass die Stabilisierungslage vollständig im Werkstoff der Trägerschicht eingebettet ist, jedoch unmittelbar unter der Oberfläche.

2. Bauelement nach Anspruch 1, **dadurch gekennzeichnet, dass** die Stabilisierungslage eine Vlies-, Gitter- oder Gewebelage ist.

3. Bauelement nach Anspruch 1 oder 2, **dadurch gekennzeichnet, dass** die Trägerschicht eine Dichte von größer oder gleich (≥) 800 kg/m3, insbesondere zwischen 1.000 kg/m3 und 2.500 kg/m3, vorzugsweise von 1.500 kg/m3 bis 2.000 kg/m3, aufweist.

4. Bauelement nach einem der Ansprüche 1 bis 3, **dadurch gekennzeichnet, dass** unterseitig der Trägerschicht ein Gegenzug vorgesehen ist.

5. Bauelement nach einem der Ansprüche 1 bis 4, **dadurch gekennzeichnet, dass** die Deckschicht ein Overlay umfasst, welches oberhalb des Dekorpapiers angeordnet ist.

6. Bauelement nach einem der Ansprüche 1 bis 5, **dadurch gekennzeichnet, dass** die Deckschicht zumindest eine Lage aus einem Kernpapier umfasst, wobei das Kernpapier unterhalb des Dekorpapiers angeordnet ist.

7. Bauelement nach einem der Ansprüche 1 bis 6, **dadurch gekennzeichnet, dass** die Deckschicht zumindest eine Armierungslage aufweist.

8. Bauelement nach einem der Ansprüche 1 bis 7, **dadurch gekennzeichnet, dass** an den Seitenrändern der Trägerschicht Verriegelungsmittel vorgesehen sind

9. Verfahren zur Herstellung eines plattenförmigen Bauelements mit den Merkmale eines der vorangegangen Ansprüche 1 bis 8 mit folgenden Schritten:
a) Bereitstellen einer Trägerschicht, welche vollständig oder überwiegend aus einem Polyurethan besteht und Füllstoffe, insbesondere mineralische Füllstoffe, enthält, welche eine Korngröße von kleiner oder gleich (≤) 1 mm besitzen;
b) Anordnen einer Deckschicht oberhalb der Trägerschicht, wobei die Deckschicht zumindest eine Lage aus Dekorpapier aufweist und in die Trägerschicht ein Stabilisierungselement in Form von zumindest einer Stabilisierungslage eingebettet ist;
c) Verpressen der Trägerschicht und die Deckschicht miteinander unter Temperatur- und Druckeinwirkung, derart, dass die Stabilisierungslage oberflächennah in der Trägerschicht integriert wird, so dass die Stabilisierungslage vollständig im Werkstoff der Trägerschicht eingebettet wird, jedoch unmittelbar unter der Oberfläche der Trägerschicht.

10. Verfahren nach Anspruch 9, **dadurch gekennzeichnet, dass** das Verpressen bei Temperaturen in einem Bereich von 120 °C bis 240°C erfolgt, wobei diese Temperatur an der Oberfläche eines Pressbleches eingestellt wird, das mit dem Bauelement in Kontakt gebracht wird.

11. Verfahren nach Anspruch 9 oder 10, **dadurch gekennzeichnet, dass** die Presszeit zwischen 5 Sekunden und 45 Sekunden beträgt.

12. Verfahren nach einem der Ansprüche 9 bis 11, **dadurch gekennzeichnet, dass** der Pressdruck zwischen 20 und 80 kg/cm2 beträgt.

13. Verfahren nach einem der Ansprüche 9 bis 12, **dadurch gekennzeichnet, dass** die zur Deckschicht weisende Oberfläche der Trägerschicht vor dem Verpressen mit der Deckschicht mit einer oberflächenvergrößernden Profilierung versehen wird, insbesondere aufgeraut wird.

## Claims

1. Plate-shaped construction element, in particular flooring panel, which has a carrier layer and a top cover layer, wherein the carrier layer is formed on the basis of polyurethane (PU) and the cover layer has at least one layer of decorative paper, wherein the carrier layer and the cover layer are pressed together under the action of temperature and pressure, **characterised in that** fillers, in particular mineral fillers, are contained in the carrier layer, wherein the fillers have a particle size of less than or equal to (≤) 1 mm, and a stabilising element in the form of at least one stabilising layer is embedded in the carrier layer, wherein the stabilising layer is arranged close to the surface in the carrier layer, so that the stabilising layer is completely embedded in the material of the carrier layer, but directly below the surface.

2. Construction element according to claim 1, **characterised in that** the stabilising layer is a fleece, mesh or fabric layer.

3. Construction element according to claim 1 or 2, **characterised in that** the carrier layer has a density greater than or equal to (≥) 800 kg/m³, in particular between 1,000 kg/m³ and 2,500 kg/m³, preferably from 1,500 kg/m³ to 2,000 kg/m³.

4. Construction element according to any one of claims 1 to 3, **characterised in that** a counter-liner is provided on the underside of the carrier layer.

5. Construction element according to any one of claims 1 to 4, **characterised in that** the cover layer comprises an overlay which is arranged above the decorative paper.

6. A building element according to any one of claims 1 to 5, **characterised in that** the cover layer comprises at least one layer of a core paper, wherein the core paper is arranged below the decorative paper.

7. Construction element according to any one of claims 1 to 6, **characterised in that** the cover layer has at least one reinforcement layer.

8. Construction element according to any one of claims 1 to 7, **characterised in that** locking means are provided at the side edges of the carrier layer.

9. Method for the manufacture of a plate-shaped construction element having the features of any one of the preceding claims 1 to 8, comprising the following steps:
a) providing a carrier layer which consists entirely or predominantly of a polyurethane and contains fillers, in particular mineral fillers, which have a particle size of less than or equal to (≤) 1 mm;
b) arranging a cover layer above the carrier layer, wherein the cover layer has at least one layer of decorative paper and a stabilising element in the form of at least one stabilising layer is embedded in the carrier layer;
c) pressing the carrier layer and the cover layer together under the action of temperature and pressure in such a way that the stabilising layer is integrated into the carrier layer close to the surface, so that the stabilising layer is completely embedded in the material of the carrier layer, but directly below the surface of the carrier layer.

10. Method according to claim 9, **characterised in that** the pressing is carried out at temperatures in a range of 120°C to 240°C, wherein this temperature is set at the surface of a pressing plate that is brought into contact with the construction element.

11. Method according to claim 9 or 10, **characterised in that** the pressing time is between 5 seconds and 45 seconds.

12. Method according to any one of claims 9 to 11, **characterised in that** the pressing pressure is between 20 and 80 kg/cm².

13. Method according to any one of claims 9 to 12, **characterised in that** the surface of the carrier layer facing the cover layer is provided, before pressing with the cover layer, with a surface-increasing, in particular roughened, profiling.

## Revendications

1. Élément de construction en forme de plaque, en particulier panneau de plancher, qui présente une couche de support et une couche de recouvrement supérieure, dans lequel la couche de support est formée à base de polyuréthane (PU) et la couche de recouvrement présente au moins une couche de papier décoratif, dans lequel la couche de support et la couche de recouvrement sont pressées ensemble sous un effet de température et de pression, **caractérisé en ce que** des charges, notamment des charges minérales sont contenues dans la couche de support, dans lequel les charges possèdent une granulométrie inférieure ou égale à (≤) 1 mm et un élément de stabilisation sous la forme d'au moins une couche de stabilisation est noyé dans la couche de support, dans lequel la couche de stabilisation est agencée près de la surface supérieure dans la couche de support, de sorte que la couche de stabilisation est complètement noyée dans le matériau de la couche de support, mais immédiatement en dessous de la surface supérieure.

2. Élément de construction selon la revendication 1, **caractérisé en ce que** la couche de stabilisation est une couche non tissée, à mailles, ou de tissu.

3. Élément de construction selon la revendication 1 ou 2, **caractérisé en ce que** la couche de support présente une épaisseur supérieure ou égale à (≥) 800 kg/m³, en particulier entre 1 000 kg/m³ et 2 500 kg/m³, de préférence de 1 500 kg/m³ à 2 000 kg/m³.

4. Élément de construction selon l'une quelconque des revendications 1 à 3, **caractérisé en ce qu'**une contrepartie est prévue sur la face inférieure de la couche de support.

5. Élément de construction selon l'une quelconque des revendications 1 à 4, **caractérisé en ce que** la couche de recouvrement comprend un couverture, qui est agencée au-dessus du papier décoratif.

6. Élément de construction selon l'une quelconque des revendications 1 à 5, **caractérisé en ce que** la couche de recouvrement comprend au moins une couche de papier kraft, dans lequel le papier kraft est agencé sous le papier décoratif.

7. Élément de construction selon l'une quelconque des revendications 1 à 6, **caractérisé en ce que** la couche de recouvrement présente au moins une couche d'armature.

8. Élément de construction selon l'une quelconque des revendications 1 à 7, **caractérisé en ce que** des moyens de verrouillage sont prévus sur les bords latéraux de la couche de support.

9. Procédé de fabrication d'un élément de construction en forme de plaque présentant les caractéristiques de l'une quelconque des revendications précédentes 1 à 8, comprenant les étapes suivantes consistant à :
a) fournir une couche de support constituée entièrement ou majoritairement d'un polyuréthane et contenant des charges, notamment des charges minérales, qui possèdent une granulométrie inférieure ou égale (≤) à 1 mm ;
b) agencer une couche de recouvrement au-dessus de la couche de support, dans lequel la couche de recouvrement présente au moins une couche de papier décoratif et un élément de stabilisation sous la forme d'au moins une couche de stabilisation est noyé dans la couche de support ;
c) presser la couche de support et la couche de recouvrement ensemble sous un effet de température et de pression de telle sorte que la couche de stabilisation soit intégrée à proximité de la surface supérieure dans la couche de support, de sorte que la couche de stabilisation soit complètement noyée dans le matériau de la couche de support, mais directement sous la surface de la couche de support.

10. Procédé selon la revendication 9, **caractérisé en ce que** le pressage a lieu à des températures comprises entre 120°C et 240°C, dans lequel cette température est réglée sur la surface supérieure d'une plaque de pressage qui est mise en contact avec l'élément de construction.

11. Procédé selon la revendication 9 ou 10, **caractérisé en ce que** le temps de pressage est compris entre 5 secondes et 45 secondes.

12. Procédé selon l'une quelconque des revendications 9 à 11, **caractérisé en ce que** la pression de pressage est comprise entre 20 et 80 kg/cm².

13. Procédé selon l'une quelconque des revendications 9 à 12, **caractérisé en ce que** la surface supérieure de la couche de support faisant face à la couche de recouvrement est pourvue d'un profilage agrandissant la surface supérieure, en particulier rendu rugueux, avant d'être pressée avec la couche de recouvrement.
